# EUROPÄISCHE PATENTSCHRIFT

(11) **EP 4 354 087 B1**
(45) Veröffentlichungstag und Bekanntmachung des Hinweises auf die Patenterteilung: **14.01.2026**
(21) Anmeldenummer: 23173797.4
(22) Anmeldetag: 17.05.2023
(51) Int. Cl.: G01C 21/28, G01C 21/36, B60W 60/00

(54) **VERFAHREN UND STEUERVORRICHTUNG ZUM ANSTEUERN EINES FAHRERASSISTENZSYSTEMS BEIM BEREITSTELLEN VON ASSISTIERTEN FAHRFUNKTIONEN, FAHRERASSISTENZSYSTEM, FAHRZEUG**
METHOD AND CONTROL DEVICE FOR CONTROLLING A DRIVER ASSISTANCE SYSTEM WHEN PROVIDING ASSISTED DRIVING FUNCTIONS, DRIVER ASSISTANCE SYSTEM, VEHICLE
PROCÉDÉ ET DISPOSITIF DE COMMANDE POUR COMMANDER UN SYSTÈME D'ASSISTANCE AU CONDUCTEUR LORS DE LA PRÉPARATION DE FONCTIONS DE CONDUITE ASSISTÉE, SYSTÈME D'ASSISTANCE AU CONDUCTEUR, VÉHICULE

(30) Priorität: 13.10.2022 DE 102022210775
(43) Veröffentlichungstag der Anmeldung: 17.04.2024
(73) Patentinhaber: VOLKSWAGEN AG, 38440 Wolfsburg (DE)
(72) Erfinder: Banaskiewicz, Kevin, 38106 Braunschweig (DE); Münning, Dr. Daniel, 38124 Braunschweig (DE)

(56) Entgegenhaltungen:
- EP-B1- 3 190 022
- DE-A1- 102020 118 630
- DE-A1- 102020 202 163
- US-A1- 2022 309 804

## Beschreibung

Die Erfindung betrifft ein Verfahren zum Ansteuern eines Fahrerassistenzsystems beim Bereitstellen von assistierten Fahrfunktionen, insbesondere von assistierten Lenkungsfunktionen, vorzugsweise von Quer- und/oder Längslenkungsfunktionen, eines Fahrzeuges, wobei insbesondere das Fahrzeug als ein assistiert, teilautomatisiert oder ein hochautomatisiert fahrendes Fahrzeug ausgeführt sein kann. Ferner betrifft die Erfindung ein korrespondierendes Computerprogrammprodukt zum Durchführen eines entsprechenden Verfahrens. Weiterhin betrifft die Erfindung eine korrespondierende Steuervorrichtung zum Durchführen eines entsprechenden Verfahrens. Des Weiteren betrifft die Erfindung ein korrespondierendes Fahrerassistenzsystem mit einer entsprechenden Steuervorrichtung sowie ein korrespondierendes Fahrzeug mit einem entsprechenden Fahrerassistenzsystem.

In modernen Fahrzeugen werden vermehrt Schwarmdaten von anderen Fahrzeugen verwendet, um verbesserte Fahrfunktionen zu erhalten. Die Schwarmdaten können durch eine große Anzahl an Fahrzeugen erhoben werden, die unterschiedliche Navigationsabschnitte abfahren können. Die Schwarmdaten können bspw. Fahrbahnmarkierungen, Schilder, usw. umfassen, die in den Navigationsabschnitten erkannt wurden. Die Schwarmdaten können in einer zentralen externen Vorrichtung, einer sog. Backendvorrichtung, hochgeladen werden, um dort gespeichert zu werden. Die Backendvorrichtung kann die Schwarmdaten nach Bedarf einem Fahrzeug bereitstellen, das einen bestimmten Navigationsabschnitt befährt. Das Fahrzeug kann die erhaltenen Schwarmdaten zu dem Navigationsabschnitt mit vorhandenen Kameradaten vergleichen, um vorteilhafterweise die Verkehrsdaten zu verifizieren und/oder zu vervollständigen. Mit den so verifizierten/vervollständigten Verkehrsdaten kann schließlich eine assistierte Fahrfunktion bereitgestellt werden. Bei der Verwendung von Schwarmdaten besteht potentiell immer die Gefahr, dass die Daten veraltet sein können. Veraltete Schwarmdaten können somit zu gefährlichen Situation führen.

Aus DE 10 2020 202163 A1 ist ein Verfahren zur Detektierung von Objekten und/oder Strukturen im Umfeld eines Fahrzeugs bekannt, wobei Schwarmdaten für eine Position und/oder eine bei Befahren einer Fahrstrecke darauffolgende zukünftige Position von einem zentralen Server empfangen werden, wobei die Schwarmdaten auf einer statistischen Auswertung von Sensordaten beruhen, die zu einem früheren Zeitpunkt an dieser und/oder der zukünftigen Position von einer Vielzahl von weiteren Fahrzeugen erfasst wurden. Mittels der empfangenen Schwarmdaten wird geprüft, ob eine sensorische Detektion von Objekten und/oder Strukturen im Umfeld des Fahrzeugs beeinträchtigt wird. 1

Aufgabe der Erfindung ist daher, ein verbessertes Verfahren zum Ansteuern eines Fahrerassistenzsystems beim Bereitstellen von assistierten Fahrfunktionen, insbesondere von assistierten Lenkungsfunktionen, vorzugsweise von Quer- und/oder Längslenkungsfunktionen, eines Fahrzeuges zu ermöglichen, wobei insbesondere das Fahrzeug als ein assistiert, teilautomatisiert oder ein hochautomatisiert fahrendes ausgeführt sein kann. Insbesondere ist es Aufgabe der Erfindung, ein Verfahren zum Ansteuern eines Fahrerassistenzsystems beim Bereitstellen von assistierten Fahrfunktionen zur Verfügung zu stellen, welches eine verbesserte Nutzung von Schwarmdaten ermöglicht und welches die Sicherheit und die Zuverlässigkeit beim Bereitstellen von assistierten Fahrfunktionen, insbesondere von assistierten Lenkungsfunktionen, vorzugsweise von Quer- und/oder Längslenkungsfunktionen, des Fahrzeuges erhöht. Ferner ist es Aufgabe der Erfindung, ein korrespondierendes Computerprogrammprodukt zum Durchführen eines entsprechenden Verfahrens bereitzustellen. Weiterhin ist es Aufgabe der Erfindung, eine korrespondierende Steuervorrichtung zum Durchführen eines entsprechenden Verfahrens zur Verfügung zu stellen. Des Weiteren ist es Aufgabe der Erfindung, ein korrespondierendes Fahrerassistenzsystem mit einer entsprechenden Steuervorrichtung sowie ein korrespondierendes Fahrzeug mit einem entsprechenden Fahrerassistenzsystem zur Verfügung zu stellen.

Die erfindungsgemäße Aufgabe wird gelöst durch: ein Verfahren zum Ansteuern eines Fahrerassistenzsystems beim Bereitstellen von assistierten Fahrfunktionen, umfassend assistierte Lenkungsfunktionen, vorzugsweise von Quer- und/oder Längslenkungsfunktionen, eines Fahrzeuges mit den Merkmalen des unabhängigen Verfahrensanspruches, ein korrespondierendes Computerprogrammprodukt zum Durchführen eines entsprechenden Verfahrens mit den Merkmalen des unabhängigen Computerprogrammproduktanspruches, eine korrespondierende Steuervorrichtung zum Durchführen eines entsprechenden Verfahrens mit den Merkmalen des unabhängigen Vorrichtungsanspruches, ein korrespondierendes Fahrerassistenzsystem mit den Merkmalen des unabhängigen Systemanspruches und ein korrespondierendes Fahrzeug mit den Merkmalen des nebengeordneten Vorrichtungsanspruches.

Weitere Merkmale, Vorteile und Details der Erfindung ergeben sich aus den Unteransprüchen, der Beschreibung und den Zeichnungen. Dabei gelten Merkmale und Details, die im Zusammenhang mit einzelnen erfindungsgemäßen Aspekten beschrieben sind, selbstverständlich auch im Zusammenhang mit den anderen erfindungsgemäßen Aspekten und jeweils umgekehrt, sodass bezüglich der Offenbarung zu den einzelnen Erfindungsaspekten stets wechselseitig Bezug genommen wird bzw. werden kann.

Die Erfindung stellt bereit: ein Verfahren zum Ansteuern eines Fahrerassistenzsystems beim Bereitstellen von assistierten Fahrfunktionen, umfassend assistierte Lenkungsfunktionen, vorzugsweise von Quer- und/oder Längslenkungsfunktionen, (vorzugsweise im mobilen Betrieb) eines Fahrzeuges. Das Fahrzeug kann insbesondere als ein assistiert, teilautomatisiert oder ein hochautomatisiert fahrendes Fahrzeug ausgeführt sein.

Das Verfahren weist folgende Verfahrensschritte/Aktionen auf:
- Erfassen (bspw. durch optisches, akustisches und/oder elektromagnetisches Abtasten einer Umgebung des Fahrzeuges) von Verkehrsdaten (die bspw. Informationen über Fahrbahnbegrenzungen, Verkehrsschilder usw. umfassen können) durch mindestens einen fahrzeugeigenen Sensor, insbesondere eine Kamera, vorzugsweise eine Frontkamera, für mindestens einen Navigationsabschnitt,
   wobei insbesondere ein Navigationsabschnitt ebenfalls als ein Kartenabschnitt bezeichnet werden kann,
- Erhalten (bspw. durch ein passives Erhalten, z. B. in einem topic-basierten oder inhalt-basierten Publish-Subscribe-System, und/oder ein aktives, z. B. periodisches und/oder ereignisgesteuertes, Anfragen, insbesondere für eine aktuelle Ortsposition und/oder einen aktuellen Navigationsabschnitt des Fahrzeuges) von Schwarmdaten (die bspw. Informationen über zuvor erkannte Fahrbahnbegrenzungen, gefahrene Trajektorien usw. umfassen können) von mindestens einer externen Vorrichtung für den mindestens einen Navigationsabschnitt,
   wobei insbesondere die externe Vorrichtung bspw. in Form eines externen Servers ausgeführt sein kann, welcher vorzugsweise eine Datenbank umfassen kann, auf der Schwarmdaten für verschiedene Navigationsabschnitte von unterschiedlichen Fahrzeugen, bspw. in Form von Kartendaten mit erweiterten Verkehrsinformationen, hinterlegt sein können,
- Bei einem Normalbetrieb, ein Vergleichen von den erhaltenen Schwarmdaten mit den erfassten Verkehrsdaten (umfassend bspw. Überprüfen, ob die erhaltenen Schwarmdaten mit den erfassten Verkehrsdaten im Wesentlichen korrespondieren),
- Bereitstellen von assistierten Fahrfunktionen für den mindestens einen Navigationsabschnitt in Abhängigkeit von einem Vergleichen in (mindestens) zwei unterschiedlichen Betriebsmodi:
   1) einem Normalbetrieb,
      bei dem assistierte Fahrfunktionen des Fahrzeuges mithilfe von den erhaltenen Schwarmdaten und den erfassten Verkehrsdaten bereitgestellt werden,
      wenn ein Vergleichen der erhaltenen Schwarmdaten mit den erfassten Verkehrsdaten möglich ist,
      bspw. wenn alle benötigten oder zumindest einige notwendige Verkehrsdaten erfasst werden können, die einen Vergleich von den erhaltenen Schwarmdaten mit den erfassten Verkehrsdaten ermöglichen können,
      z. B. wenn alle Fahrbahnmarkierungen erfasst werden können,
      und/oder wenn zumindest eine Fahrbahnmarkierung erfasst werden kann, sodass ein Vergleich mit den Schwarmdaten erfolgen kann, und sodass bei einem positiven Ergebnis die fehlenden Fahrbahnmarkierungen aus den Schwarmdaten vervollständigt und/oder gefahrene Trajektorien aus den Schwarmdaten gewonnen werden können,
   2) einem Sonderbetrieb,
      bei dem assistierte Fahrfunktionen des Fahrzeuges nur mithilfe von den erhaltenen Schwarmdaten bereitgestellt werden können,
      wenn ein Vergleich der erhaltenen Schwarmdaten mit den erfassten Verkehrsdaten nicht möglich oder erschwert ist,
      bspw.:
         a) wenn keine Verkehrsdaten erfasst werden können,
            z. B. wenn auf der Fahrbahn keine Fahrbahnmarkierungen vorhanden sind,
            und/oder
         b) wenn die erfassten Verkehrsdaten nicht vollständig erfasst werden können,
            z. B. wenn aufgrund von aktueller Verkehrssituation Fahrbahnmarkierungen, bspw. durch andere Fahrzeuge, Objekte o. Ä., verdeckt sind,
            und/oder wenn ein Erfassungsbereich des mindestens einen Sensors begrenzt ist, bspw. wenn eine scharfe Kurve bevorsteht,
            und/oder
         c) wenn die erhaltenen Schwarmdaten vertrauenswürdig sind,
            z. B. wenn die erhaltenen Schwarmdaten ein Ausweichen einem Hindernis andeuten, welches das eigene Fahrzeug (noch) nicht sieht,
            und/oder wenn die erhaltenen Schwarmdaten aktuell bzw. nicht veraltet sind, usw.

Die Schwarmdaten werden z. B. durch unterschiedliche Fahrzeuge generiert, die verschiedene Navigationsabschnitte (Ai, wobei i = 1, 2, ... N, und wobei N eine beliebig hohe Zahl sein kann) abfahren können. Die Fahrzeuge können dabei Verkehrsinformationen, wie z. B. Spurenbegrenzungen, Schilder, den gefahrenen Weg usw. erfassen und diese Informationen in Form von Schwarmdaten in die externe Vorrichtung hochladen.

Die bisherige Nutzung der Schwarmdaten sieht vor:
Vergleich von erhaltenen Schwarmdaten mit den aktuell erfassten Verkehrsdaten ==> Bei Abweichung ==> Schwarmdaten werden als unplausibel erklärt ==> Schwarmdaten werden verworfen.

Die Erfindung erkennt zum einen, dass bei der Verwendung von Schwarmdaten potentiell die Gefahr besteht, dass diese Daten veraltet sind und die ersten Fahrzeuge, die eine neue Situation erleben, noch veraltete Daten erhalten.

Zumeist wird der Download von Schwarmdaten zu einem Navigationsabschnitt erst dann gesperrt, wenn eine bestimmte Anzahl an Fahrzeugen, z. B. 3 Fahrzeuge, eine neue Situation, wie z. B. eine Baustelle, erkennen.

Die Erfindung erkennt außerdem, dass aktualisierte Schwarmdaten mit einer großen Verzögerung erstellt werden.

Zumeist werden neue Schwarmdaten für den gleichen Navigationsabschnitt erst dann freigegeben, wenn eine weitere Anzahl an Fahrzeugen, z. B. 10 Fahrzeuge, eine neue Situation, wie z. B. eine Baustelle, meistern.

Da die Schwarmdaten in dem diese nutzenden Fahrzeug auch teilweise gepuffert werden (z. B. 1 km * 1km Kartenausschnitt) besteht zurzeit keine Möglichkeit, direkt auf eine neue Gefahren-Situation, wie z. B. ein Schlagloch auf der Straße, zu reagieren. In solchen Fällen muss der Benutzer des Fahrzeuges zumeist manuell eingreifen und die Lenkung des Fahrzeuges übernehmen.

Mithilfe des Verfahrens kann zum einen sichergestellt werden, dass Fahrerassistenzsysteme viel schneller auf geänderte Situationen reagieren können, und dass Änderungen viel schneller bekanntgegeben werden.

Mithilfe des Verfahrens kann zum anderen sichergestellt werden, dass, insbesondere wenn ein Vergleich der erhaltenen Schwarmdaten mit den erfassten Verkehrsdaten nicht möglich oder erschwert ist, es ermöglicht wird, veraltete Schwarmdaten schneller zu erkennen und/oder die aktuellen Schwarmdaten schneller zu erhalten.

Vorteilhafterweise kann mithilfe des Verfahrens eine unterstützte Bereitstellung von assistierten Fahrzeugfunktionen erheblich verbessert werden. Der Benutzer des Fahrzeuges wird mithilfe des Verfahrens weniger eingreifen müssen. Die Sicherheit im Betrieb des Fahrzeuges kann mithilfe des Verfahrens deutlich erhöht werden. Der Kundenkomfort und das Vertrauen in das Fahrerassistenzsystem können mithilfe des Verfahrens wesentlich erhöht werden.

In dem Sonderbetrieb kann ein Sonderablauf bereitgestellt werden, um sicherzustellen, dass die veralteten Schwarmdaten nicht genutzt werden, und/oder um zu überprüfen, ob die (neu) erhaltenen Schwarmdaten plausibel sind.

Zum einen kann eine Puffer-Größe reduziert werden (Puffern von Schwarmdaten für einen kleineren Navigationsabschnitt, z. B.: anstatt 1 km * 1 km Kartenausschnitt, wie im Normalbetrieb, 0,5 km * 0,5 km oder weniger).

Zum anderen können geografische und/oder topologische Parameter des mindestens einen Navigationsabschnittes berücksichtigt werden, bspw. kein Trennen von Navigationsabschnitten an Kurven o. Ä.

Zudem können die Schwarmdaten für einen bestimmten Navigationsabschnitt von dem ersten Fahrzeug, welches etwas Unerwartetes erkennt, unmittelbar mit einem Notfallmarker markiert werden.

Die Schwarmdaten mit dem Notfallmarker können über eine Car2X-Kommunikation an alle Teilnehmer ausgesandt werden, insbesondere direkt an die externe Vorrichtung, und ggf. über Car2Car-Kommunikation, an Fahrzeuge in der Nähe und/oder über Car2I-Kommunikation an Infrastrukturteilnehmer, usw.

Auf diese Weise können die möglicherweise veralteten Schwarmdaten viel schneller erkannt werden. Wenn die Schwarmdaten veraltet sind, können diese viel schneller verworfen werden.

Auch können somit die aktualisierten Schwarmdaten schneller erhalten sowie effektiver benutzt werden. Maßnahmen, wie die Sonder-Prüfung für die neuen Schwarmdaten, können ferner viel schneller eingeleitet werden. Wenn die neu ankommenden Schwarmdaten in Ordnung sind, können diese relativ schnell, sicher und zuverlässig zum Bereitstellen von assistierten Fahrfunktionen genutzt werden.

Vorteilhafterweise können die Schwarmdaten für einen bestimmten Navigationsabschnitt von dem Fahrzeug, welches sie erstellt, mit einem Zeitstempel (bspw. in Form einer Erstellungszeit) markiert werden. Somit kann eine einfache Übersicht über die Gültigkeit und somit über die Vertrauenswürdigkeit von Schwarmdaten bereitgestellt werden, wenn bspw. angenommen wird, dass die Schwarmdaten nur eine bestimmte Zeit nach der Erstellungszeit gültig sind.

Erfindungsgemäß weisen die erfassten Verkehrsdaten erfasste Fahrbahnmarkierungen für den mindestens einen Navigationsabschnitt auf. Die erhaltenen Schwarmdaten weisen ebenfalls erhaltene Fahrbahnmarkierungen für den mindestens einen Navigationsabschnitt auf. Außerdem können die Schwarmdaten Trajektoriendaten für den mindestens einen Navigationsabschnitt aufweisen. Mithilfe von diesen Verkehrsinformationen können mithilfe des Fahrerassistenzsystems vorteilhafte Lenkungsfunktionen bereitgestellt werden.

Ferner ist es denkbar, dass im Normalbetrieb mindestens ein Steuerablauf durchgeführt wird, wenn erfasste Fahrbahnmarkierungen für den mindestens einen Navigationsabschnitt unvollständig sind:
- Vergleichen von verfügbaren erfassten Fahrbahnmarkierungen gemäß den erfassten Verkehrsdaten mit den erhaltenen Fahrbahnmarkierungen gemäß den erhaltenen Schwarmdaten, und
- Bestimmen einer Spur in Abhängigkeit von den Trajektoriendaten für den mindestens einen Navigationsabschnitt, wenn die verfügbaren erfassten Fahrbahnmarkierungen mit den erhaltenen Fahrbahnmarkierungen in einem zulässigen Abweichungsbereich liegen, und/oder in Abhängigkeit von verfügbaren erfassten Fahrbahnmarkierungen gemäß den erfassten Verkehrsdaten und/oder in Abhängigkeit von den erhaltenen Fahrbahnmarkierungen gemäß den erhaltenen Schwarmdaten (beim Bestimmen einer Spur in Abhängigkeit von den Trajektoriendaten können vorteilhafterweise die erfassten und/oder die erhaltenen Fahrbahnmarkierungen berücksichtigt werden. Auf diese Weise kann die Sicherheit beim Bestimmen einer Spur auf Basis der Trajektoriendaten erhöht werden. Die Spur kann z. B. im Vergleich zu den Trajektoriendaten weiter nach rechts versetzt werden, damit das eigene Fahrzeug nicht in den Gegenverkehr kommt.), oder
- Verwerfen von den erhaltenen Schwarmdaten, wenn die verfügbaren erfassten Fahrbahnmarkierungen mit den erhaltenen Fahrbahnmarkierungen außerhalb des zulässigen Abweichungsbereichs liegen (z. B. wenn die erfassten und die erhaltenen Fahrbahnmarkeirungen zu weit voneinander liegen).

Auf diese Weise können assistierte Lenkungsfunktionen bereitgestellt werden, auch wenn die Fahrbahnmarkierungen zumindest zum Teil nicht erfasst werden können.

Wie oben bereits erwähnt, kann der Sonderbetrieb dann auf eine vorteilhafte Weise durchgeführt werden,
- wenn keine Verkehrsdaten erfasst werden können, bspw. wenn Fahrbahnmarkierungen nicht vorhanden sind, und/oder
- wenn die erfassten Verkehrsdaten nicht vollständig erfasst werden können, insbesondere aufgrund von aktueller Verkehrssituation, bspw. wenn Fahrbahnmarkierungen verdeckt vorhanden sind, oder bspw. wenn eine scharfe Kurve bevorsteht,
- wenn die erhaltenen Schwarmdaten im Vergleich zu den erfassten Verkehrsdaten vertrauenswürdig sind, und/oder
- wenn die erhaltenen Schwarmdaten mit keinem Notfallmarker markiert sind, und/oder
- wenn die erhaltenen Schwarmdaten aktuell bzw. gültig bzw. nicht veraltet sind, usw.

Auf diese Weise kann die verbesserte Funktionalität des Fahrerassistenzsystems ermöglicht werden, auch wenn ein Vergleich der erhaltenen Schwarmdaten mit den erfassten Verkehrsdaten nicht möglich oder erschwert ist.

Weiterhin ist es denkbar, dass im Sonderbetrieb mindestens eine von den folgenden Aktionen durchgeführt wird:
- Reduzieren des mindestens einen Navigationsabschnittes, für den Schwarmdaten erhalten werden, insbesondere abgefragt werden, und/oder
- Anpassen des mindestens einen Navigationsabschnittes in Abhängigkeit von seinen geografischen und/oder topologischen Parametern (wie z. B. Kurvenradius, Fahrbahnsteigung, usw.),
- Überprüfen von erhaltenen Schwarmdaten für den mindestens einen Navigationsabschnitt auf einen Notfallmarker,
- Überprüfen von erhaltenen Schwarmdaten für den mindestens einen Navigationsabschnitt auf Gültigkeit gemäß ihrem Zeitstempel,
- Verwerfen von erhaltenen Schwarmdaten mit einem Notfallmarker und/oder von veralteten Schwarmdaten,
- Ausgeben einer Empfehlung an einen Benutzer des Fahrzeuges zu einem manuellen Übernehmen von Fahrfunktionen.

Auf diese Weise kann die Möglichkeit einer sicheren Nutzung von Schwarmdaten ermöglicht werden, und zwar auch dann, wenn ein Vergleich der erhaltenen Schwarmdaten mit den erfassten Verkehrsdaten nicht möglich oder erschwert ist.

Vorteilhafterweise kann das Verfahren ferner vorsehen:
- Markieren von erfassten Verkehrsdaten für den mindestens einen Navigationsabschnitt mit einem Notfallmarker, wenn das Fahrzeug eine unerwartete und/oder ungewöhnliche Verkehrssituation erkennt, und/oder
- Markieren von erfassten Verkehrsdaten für den mindestens einen Navigationsabschnitt mit einem Zeitstempel, wenn das Fahrzeug die erfassten Verkehrsdaten als Schwarmdaten für andere Fahrzeuge bereitstellt, und/oder
- Übermitteln von erfassten Verkehrsdaten für den mindestens einen Navigationsabschnitt mit einem Notfallmarker und/oder mit einem Zeitstempel zur Nutzung als Schwarmdaten,

über eine Car2X-Kommunikation an die externe Vorrichtung,
über eine Car2Car-Kommunikation an andere Fahrzeuge, und/oder
über eine Car2I-Kommunikation an Infrastrukturteilnehmer.

Eine Kommunikation kann bspw. über WLAN, bspw. WLAN-P, über Mobilfunk, Internet, bspw. 3G, 4G, 5G oder eine spätere Generation erfolgen.

Auf diese Weise kann das eigene Fahrzeug selbst dazu beitragen, dass ungewöhnliche und/oder unerwartete Situationen, wie z. B. Baustellen ohne Fahrbahnmarkierungen, Hindernisse auf der Fahrbahn o. Ä. schneller erkannt werden. Auch kann somit das eigene Fahrzeug selbst dazu beitragen, dass Schwarmdaten auf eine verbesserte Weise als aktuell oder veraltet verifiziert werden können, insbesondere dass veraltete Schwarmdaten schnellerverworfen werden können, und dass neue vertrauenswürdige Schwarmdaten schneller genutzt werden können.

Zudem stellt die Erfindung bereit: ein Computerprogrammprodukt, umfassend Befehle, die bei der Ausführung des Computerprogramms durch einen Computer diesen veranlassen, ein Verfahren durchzuführen, welches wie oben beschrieben ablaufen kann. Mithilfe des erfindungsgemäßen Computerprogrammproduktes können die gleichen Vorteile erreicht werden, die im Zusammenhang mit dem oben beschriebenen Verfahren beschrieben wurden. Auf diese Vorteile wird vorliegend vollumfänglich Bezug genommen.

Außerdem kann die Erfindung umfassen: eine Steuervorrichtung zum Ansteuern eines Fahrerassistenzsystems beim Bereitstellen von assistierten Fahrfunktionen, insbesondere von assistierten Lenkungsfunktionen, vorzugsweise von Quer- und/oder Längslenkungsfunktionen, eines Fahrzeuges, wobei insbesondere das Fahrzeug als ein assistiert, teilautomatisiert oder ein hochautomatisiert fahrendes Fahrzeug ausgeführt sein kann,
aufweisend: eine Speichervorrichtung und eine Rechenvorrichtung, wobei in der Speichervorrichtung ein Code hinterlegt ist, und wobei beim Ausführen des Codes durch die Rechenvorrichtung ein Verfahren durchgeführt wird, welches wie oben beschrieben ablaufen kann. Mithilfe der erfindungsgemäßen Steuervorrichtung können die gleichen Vorteile erreicht werden, die im Zusammenhang mit dem oben beschriebenen Verfahren erläutert wurden. Auf diese Vorteile wird vorliegend vollumfänglich Bezug genommen.

Vorteilhafterweise kann die Steuervorrichtung zum Ansteuern des mindestens einen fahrzeugeigenen Sensors, insbesondere einer Kamera, vorzugsweise einer Frontkamera, ausgeführt sein.

Ferner kann die Steuervorrichtung als eine separate Steuervorrichtung zum Bereitstellen von assistierten Fahrfunktionen ausgeführt sein.

Vorteilhafterweise kann die Steuervorrichtung einen Pufferspeicher zur Speicherung von erhaltenen Schwarmdaten aufweisen, wobei insbesondere der Pufferspeicher als ein Arbeitsspeicher ausgeführt sein kann.

Darüber hinaus stellt die Erfindung bereit: ein Fahrerassistenzsystem zum Bereitstellen von assistierten Fahrfunktionen, insbesondere von assistierten Lenkungsfunktionen, vorzugsweise von Quer- und/oder Längslenkungsfunktionen, eines Fahrzeuges, wobei insbesondere das Fahrzeug als ein assistiert, teilautomatisiert oder ein hochautomatisiert fahrendes Fahrzeug ausgeführt sein kann, aufweisend eine Steuervorrichtung, (die wie oben beschrieben ausgeführt sein kann) umfassend:
eine Speichervorrichtung und eine Rechenvorrichtung,
wobei in der Speichervorrichtung ein Code hinterlegt ist,
und wobei beim Ausführen des Codes durch die Rechenvorrichtung ein Verfahren nach einem der vorhergehenden Ansprüche durchgeführt wird.
Mithilfe des erfindungsgemäßen Fahrerassistenzsystems können die gleichen Vorteile erreicht werden, die im Zusammenhang mit dem oben beschriebenen Verfahren erläutert wurden. Auf diese Vorteile wird vorliegend vollumfänglich Bezug genommen.

Vorteilhafterweise kann das Fahrerassistenzsystem einen Pufferspeicher zur Speicherung von erhaltenen Schwarmdaten aufweisen, wobei insbesondere der Pufferspeicher als ein Arbeitsspeicher, vorzugsweise als ein flüchtiger Datenspeicher, ausgeführt sein kann.

Weiterhin ist es denkbar, dass das Fahrerassistenzsystem einen Schwarmdatenspeicher zur Speicherung von erweiterten Schwarmdaten aufweisen kann, wobei insbesondere der Schwarmdatenspeicher als ein permanenter Datenspeicher ausgeführt sein kann.

Ferner stellt die Erfindung bereit: ein Fahrzeug, aufweisend ein Fahrerassistenzsystem, welches wie oben beschrieben ausgeführt sein kann. Mithilfe des erfindungsgemäßen Fahrzeuges können die gleichen Vorteile erreicht werden, die im Zusammenhang mit dem oben beschriebenen Verfahren erläutert wurden. Auf diese Vorteile wird vorliegend vollumfänglich Bezug genommen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: beispielhafte Verkehrssituationen, in welchen nicht alle Verkehrsinformationen erfasst werden können, die für die Lenkung des Fahrzeuges notwendig sein sollten,
- Fig. 2: eine beispielhafte Vervollständigung von Verkehrsinformationen mithilfe von Schwarmdaten,
- Fig. 3: einen beispielhaften Ablauf eines Verfahrens im Sinne der vorliegenden Offenbarung.

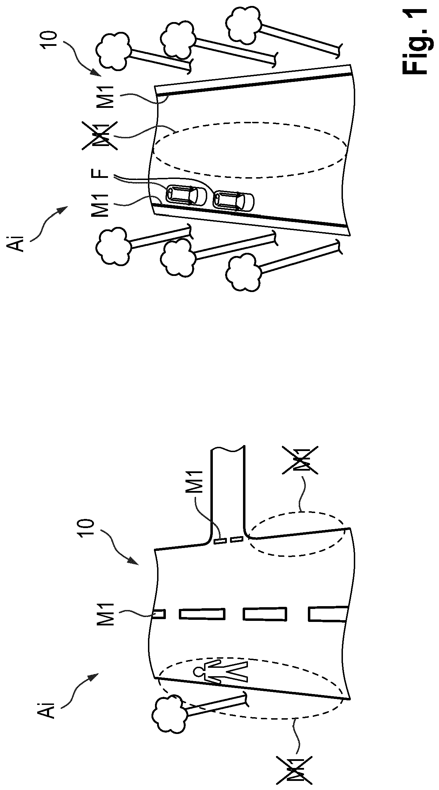

Die Fig. 1 - 3 dienen zum Erklären eines Verfahrens im Sinne der vorliegenden Offenbarung, welches zum Ansteuern eines Fahrerassistenzsystems 100 beim Bereitstellen von assistierten Fahrfunktionen AF, insbesondere von assistierten Lenkungsfunktionen LF, vorzugsweise von Quer- und/oder Längslenkungsfunktionen, vorzugsweise im mobilen Betrieb, eines Fahrzeuges F entwickelt wurde. Das Fahrzeug F kann dabei als ein assistiert, teilautomatisiert oder ein hochautomatisiert fahrendes Fahrzeug F ausgeführt sein.

Das Verfahren weist folgende(n) Verfahrensschritt/Aktion auf:
- Erfassen von Verkehrsdaten 10 durch mindestens einen fahrzeugeigenen Sensor S, insbesondere eine Kamera K, vorzugsweise eine Frontkamera, für mindestens einen Navigationsabschnitt Ai (i = 1, 2 ... N, wobei N eine beliebig hohe Zahl sein kann).

Das Erfassen kann bspw. durch optisches, akustisches und/oder elektromagnetisches Abtasten einer Umgebung des Fahrzeuges umfassen.

Die Verkehrsdaten 10 können bspw. Informationen über Fahrbahnbegrenzungen, Verkehrsschilder usw. umfassen.

Der Navigationsabschnitt Ai kann ebenfalls als ein Kartenabschnitt (bspw. 1 km * 1 km Kartenausschnitt) bezeichnet werden, vgl. hierzu Fig. 1 - 3.

Das Verfahren weist ferner folgende(n) Verfahrensschritt/Aktion auf:
- Erhalten von Schwarmdaten 20 von mindestens einer externen Vorrichtung 200 für den mindestens einen Navigationsabschnitt Ai.

Das Erhalten kann bspw. durch ein passives Erhalten, z. B. in einem topic-basierten oder inhalt-basierten Publish-Subscribe-System, und/oder ein aktives, z. B. periodisches und/oder ereignisgesteuertes, Anfragen, insbesondere für eine aktuelle Ortsposition und/oder einen aktuellen Navigationsabschnitt Ai des Fahrzeuges, erfolgen.

Die Schwarmdaten 20 können bspw. Informationen über zuvor erkannte Fahrbahnbegrenzungen, gefahrene Trajektorien usw. umfassen.

Die externe Vorrichtung 200 kann bspw. in Form eines externen Servers ausgeführt sein, welcher vorzugsweise eine Datenbank umfassen kann, auf der Schwarmdaten ND für verschiedene Navigationsabschnitte Ai von unterschiedlichen Fahrzeugen F, bspw. in Form von Kartendaten mit erweiterten Verkehrsinformationen, hinterlegt sein können.

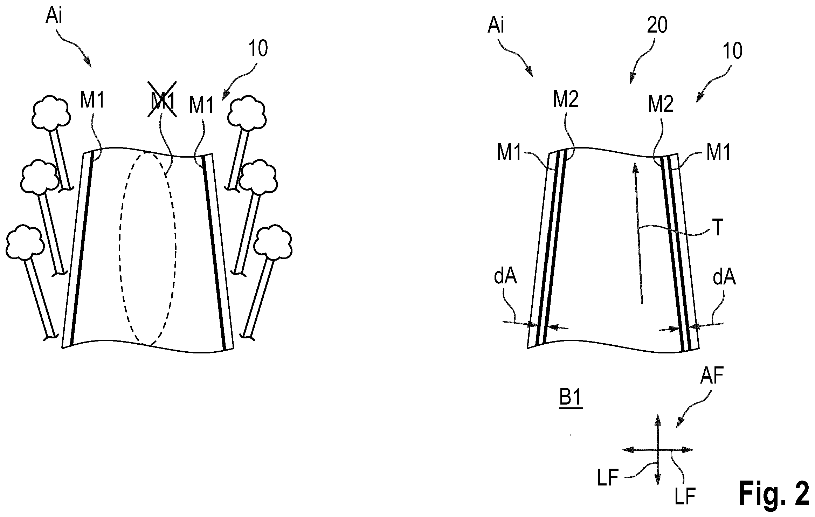

Das Verfahren weist ferner folgende(n) Verfahrensschritt/Aktion auf:
- Vergleichen von den erhaltenen Schwarmdaten 20 mit den erfassten Verkehrsdaten 10, wie es bspw. in Fig. 2 dargestellt ist.

Das Vergleichen kann ein Überprüfen umfassen, ob die erhaltenen Schwarmdaten 20 den erfassten Verkehrsdaten 10 im Wesentlichen korrespondieren.

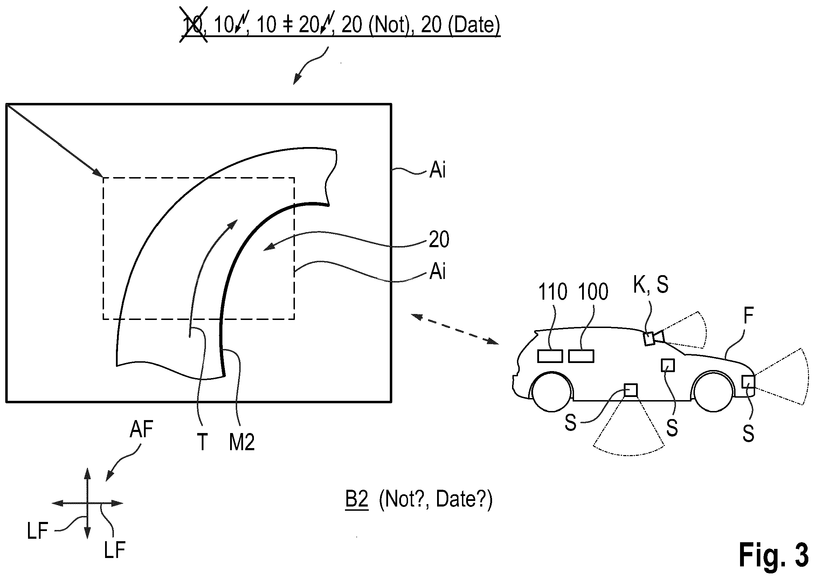

Das Verfahren weist ferner folgende(n) Verfahrensschritt/Aktion auf:
- Bereitstellen von assistierten Fahrfunktionen umfassend assistierte Lenkungsfunktionen LF, vorzugsweise von Quer- und/oder Längslenkungsfunktionen, für den mindestens einen Navigationsabschnitt Ai in Abhängigkeit von dem Vergleich in (mindestens) zwei unterschiedlichen Betriebsmodi B1, B2:
   1) einem Normalbetrieb B1,
      bei dem assistierte Fahrfunktionen des Fahrzeuges F mithilfe von den erhaltenen Schwarmdaten 20 und den erfassten Verkehrsdaten 10 bereitgestellt werden,
      wenn ein Vergleich der erhaltenen Schwarmdaten 20 mit den erfassten Verkehrsdaten 10 möglich ist,
      bspw. wenn alle benötigten oder zumindest einige notwendige Verkehrsdaten 10 erfasst werden können, die einen Vergleich von den erhaltenen Schwarmdaten 20 mit den erfassten Verkehrsdaten 10 ermöglichen können,
      z. B. wenn alle Fahrbahnmarkierungen M1 erfasst werden können,
      und/oder wenn zumindest eine Fahrbahnmarkierung M1 erfasst werden kann, wie dies in Fig. 2 angedeutet ist, sodass ein Vergleich mit den erhaltenen Schwarmdaten 20 erfolgen kann, und sodass bei einem positiven Ergebnis die fehlenden Fahrbahnmarkierungen M1, M2 aus den erhaltenen Schwarmdaten 20 vervollständigt und/oder gefahrene Trajektorien aus den erhaltenen Schwarmdaten 20 gewonnen werden können,
   2) einem Sonderbetrieb B2,
      bei dem assistierte Fahrfunktionen des Fahrzeuges F nur mithilfe von den erhaltenen Schwarmdaten 20 bereitgestellt werden können,
      wenn ein Vergleich der erhaltenen Schwarmdaten 20 mit den erfassten Verkehrsdaten 10 nicht möglich oder erschwert ist,
      bspw.:
         a) wenn keine Verkehrsdaten 10 erfasst werden können,
            z. B. wenn Fahrbahnmarkierungen M1 nicht vorhanden sind ,
            und/oder
         b) wenn die erfassten Verkehrsdaten 10 nicht vollständig erfasst werden können,
            z. B. wenn aufgrund von aktueller Verkehrssituation Fahrbahnmarkierungen M1, bspw. durch andere Fahrzeuge, Objekte o. Ä., verdeckt sind,
            und/oder wenn ein Erfassungsbereich des mindestens einen Sensors S begrenzt ist, bspw. wenn eine scharfe Kurve bevorsteht, wie dies in Fig. 3 angedeutet ist,
            und/oder
         c) wenn die erhaltenen Schwarmdaten 20 vertrauenswürdig sind,
            z. B. wenn die erhaltenen Schwarmdaten 20 ein Ausweichen einem Hindernis andeuten, welches das eigene Fahrzeug (noch) nicht sieht,
            und/oder wenn die erhaltenen Schwarmdaten 20 keinen Notfallmarker Not aufweisen, und/oder wenn die erhaltenen Schwarmdaten 20 aktuell bzw. gültig bzw. nicht veraltet sind, usw.

Die Schwarmdaten 20 können durch unterschiedliche Fahrzeuge F generiert werden, die verschiedene Navigationsabschnitte Ai abfahren können. Die Fahrzeuge können dabei Verkehrsinformationen, wie z. B. Spurenbegrenzungen, Schilder, den gefahrenen Weg usw. erfassen und diese Informationen in Form von Schwarmdaten 20 in die externe Vorrichtung 200 hochladen.

Die bisherige Nutzung der Schwarmdaten 20 sieht vor:
Vergleich von erhaltenen Schwarmdaten 20 mit den aktuell erfassten Verkehrsdaten 10 ==> Bei Abweichung ==> Schwarmdaten 20 werden als unplausibel erklärt ==> Schwarmdaten 20 werden verworfen.

Die Erfindung erkennt zum einen, dass bei der Verwendung von Schwarmdaten 20 potentiell die Gefahr besteht, dass die Schwarmdaten 20 veraltet sind und die ersten Fahrzeuge F, die eine neue Situation erkennen, noch veraltete Schwarmdaten 20 erhalten.

Zumeist wird ein Navigationsabschnitt Ai erst dann gesperrt, wenn eine bestimmte Anzahl an Fahrzeugen F, z. B. 3 Fahrzeuge, eine neue Situation, wie z. B. eine Baustelle, erkennen.

Die Erfindung erkennt außerdem, dass aktualisierte Schwarmdaten 20 nur mit einer Verzögerung erstellt werden können.

Zumeist werden neue Schwarmdaten 20 für den gleichen Navigationsabschnitt Ai erst dann freigegeben, wenn eine weitere Anzahl an Fahrzeugen F, z. B. 10 Fahrzeuge, eine neue Situation wie z. B. eine Baustelle, meistern.

Da die Schwarmdaten 20 in dem nutzenden Fahrzeug F auch teilweise gepuffert werden (z. B. 1 km * 1 km Kartenausschnitt) besteht zurzeit keine Möglichkeit, direkt auf eine neue Gefahren-Situation, z. B. Schlagloch auf der Straße, zu reagieren. In solchen Fällen muss der Benutzer des Fahrzeuges F die Lenkung des Fahrzeuges F übernehmen.

Im Sonderbetrieb B2 kann ein Sonderablauf bereitgestellt werden, um sicherzustellen, dass die veralteten Schwarmdaten 20 nicht genutzt werden, und/oder um zu überprüfen, ob die erhaltenen Schwarmdaten 20 plausibel sind.

Zum einen kann im Sonderbetrieb B2 eine Puffer-Größe reduziert werden, z. B. Puffern von Schwarmdaten für einen kleineren Navigationsabschnitt, z. B.: anstatt 1 km * 1 km Kartenausschnitt, wie im Normalbetrieb, 0,5 km * 0,5 km oder weniger.

Zum anderen können geografische und/oder topologische Parameter (Steigung, Biegung, usw.) des mindestens einen Navigationsabschnittes Ai berücksichtigt werden, bspw. kein Trennen von Navigationsabschnitten an Kurven o. Ä.

Zudem können die Verkehrsdaten 10 für einen bestimmten Navigationsabschnitt Ai von dem ersten Fahrzeug F, welches etwas Unerwartetes erkennt, unmittelbar mit einem Notfallmarker Not markiert werden.

Die Verkehrsdaten 10 mit dem Notfallmarker Not können über eine Car2X-Kommunikation an alle Teilnehmer ausgesandt werden, insbesondere direkt an die externe Vorrichtung 20 und ggf. über Car2Car-Kommunikation an Fahrzeuge F in der Kommunikationsreichweite und/oder über Car2I-Kommunikation an Infrastrukturteilnehmer, usw.

Auf diese Weise können die möglicherweise veralteten Schwarmdaten 20 viel schneller erkannt werden. Wenn die Schwarmdaten 20 veraltet sind, können diese viel schneller verworfen werden.

Auch können somit die aktualisierten Schwarmdaten 20 schneller erhalten sowie effektiver benutzt werden. Maßnahmen, wie die Sonder-Prüfung für die neuen Schwarmdaten 20, können ferner viel schneller eingeleitet werden. Wenn die neu eingehenden Schwarmdaten 20 positiv überprüft sind, können diese relativ schnell, sicher und zuverlässig zum Bereitstellen von assistierten Fahrfunktionen AF genutzt werden.

Vorteilhafterweise können die Schwarmdaten 20 für einen bestimmten Navigationsabschnitt Ai von dem Fahrzeug F, welches sie erstellt, mit einem Zeitstempel Date markiert werden. Somit kann eine einfache Übersicht über die Gültigkeit und somit über die Vertrauenswürdigkeit von Schwarmdaten 20 bereitgestellt werden.

Wie es die Fig. 1 - 3 andeuten, können die erfassten Verkehrsdaten 10 erfasste Fahrbahnmarkierungen M1 für den mindestens einen Navigationsabschnitt Ai aufweisen. Die erhaltenen Schwarmdaten 20 können wiederum erhaltene Fahrbahnmarkierungen M2 für den mindestens einen Navigationsabschnitt Ai aufweisen. Wie es die Fig. 2 andeutet, können die Schwarmdaten 20 Trajektoriendaten T für den mindestens einen Navigationsabschnitt Ai aufweisen.

Die Fig. 2 deutet an, dass im Normalbetrieb B1 mindestens ein Steuerablauf durchgeführt werden kann, wenn erfasste Fahrbahnmarkierungen M1 für den mindestens einen Navigationsabschnitt Ai unvollständig sind:
- Vergleichen von verfügbaren erfassten Fahrbahnmarkierungen M1 gemäß den erfassten Verkehrsdaten 10 mit den erhaltenen Fahrbahnmarkierungen M2 gemäß den erhaltenen Schwarmdaten 20, und
- Bestimmen einer Spur auf Basis der Trajektoriendaten T für den mindestens einen Navigationsabschnitt Ai, wenn die verfügbaren erfassten Fahrbahnmarkierungen M1 mit den erhaltenen Fahrbahnmarkierungen M2 in einem zulässigen Abweichungsbereich dA liegen, wobei insbesondere für mehr Sicherheit beim Bestimmen der Spur die erfassten und/oder erhaltenen Fahrbahnmarkierungen M1 berücksichtigt werden.

Ferner kann vorgesehen sein:
- Verwerfen von den erhaltenen Schwarmdaten 20, wenn die verfügbaren erfassten Fahrbahnmarkierungen M1 mit den erhaltenen Fahrbahnmarkierungen M2 außerhalb des zulässigen Abweichungsbereichs dA liegen (z. B. wenn die erfassten und die erhaltenen Fahrbahnmarkierungen M1, M2 zu weit voneinander liegen).

Auf diese Weise können assistierte Lenkungsfunktionen LF bereitgestellt werden, auch wenn die Fahrbahnmarkierungen M1 zumindest zum Teil nicht erfasst werden können (vgl. die gestrichelten Bereiche in Fig. 1 und 2).

Wie es die Fig. 3 andeutet, kann der Sonderbetrieb B2 auf eine vorteilhafte Weise dann durchgeführt werden,
- wenn keine Verkehrsdaten 10 erfasst werden können, bspw. wenn Fahrbahnmarkierungen M1 nicht vorhanden sind, und/oder
- wenn die erfassten Verkehrsdaten 10 nicht vollständig erfasst werden können, insbesondere aufgrund von aktueller Verkehrssituation, bspw. wenn Fahrbahnmarkierungen M1 verdeckt sind, oder bspw. wenn eine scharfe Kurve bevorsteht,
- wenn die erhaltenen Schwarmdaten 20 vertrauenswürdig sind, und/oder
- wenn die erhaltenen Schwarmdaten 20 mit keinem Notfallmarker Not markiert sind, und/oder
- wenn die erhaltenen Schwarmdaten 20 gültig, aktuell und insbesondere nicht veraltet sind, usw.

Auf diese Weise kann die verbesserte Funktionalität des Fahrerassistenzsystems ermöglicht werden, auch wenn ein Vergleich der erhaltenen Schwarmdaten 20 mit den erfassten Verkehrsdaten 10 nicht möglich oder erschwert ist.

Wie es die Fig. 3 andeutet, kann im Sonderbetrieb B2 auf eine vorteilhafte Weise mindestens eine von den folgenden Aktionen durchgeführt werden:
- Reduzieren des mindestens einen Navigationsabschnittes Ai, für den Schwarmdaten 20 erhalten werden, insbesondere abgefragt werden, und/oder
- Anpassen des mindestens einen Navigationsabschnittes Ai in Abhängigkeit von seinen geografischen und/oder topologischen Parametern (wie z. B. Kurvenradius, Fahrbahnsteigung, usw.), um bspw. sicherzustellen, dass die Kurve stets in nur einem, wenn auch reduzierten, Navigationsabschnitt Ai liegt,
- Überprüfen von erhaltenen Schwarmdaten 20 für den mindestens einen Navigationsabschnitt Ai auf einen Notfallmarker Not,
- Überprüfen von erhaltenen Schwarmdaten 20 für den mindestens einen Navigationsabschnitt Ai auf Gültigkeit in Abhängigkeit von ihrem Zeitstempel Date.

Ferner kann vorgesehen sein:
- Verwerfen von erhaltenen Schwarmdaten 20 mit einem Notfallmarker Not und/oder von veralteten Schwarmdaten 20,
- Ausgeben einer Empfehlung an einen Benutzer des Fahrzeuges F zu einem manuellen Übernehmen von Fahrfunktionen AF.

Auf diese Weise kann die Möglichkeit einer sicheren Nutzung von Schwarmdaten 20 ermöglicht werden, und zwar auch dann, wenn ein Vergleich der erhaltenen Schwarmdaten 20 mit den erfassten Verkehrsdaten 10 nicht möglich oder erschwert ist.

Vorteilhafterweise kann das Verfahren ferner vorsehen:
- Markieren von erfassten Verkehrsdaten 10 für den mindestens einen Navigationsabschnitt Ai mit einem Notfallmarker Not, wenn das Fahrzeug F eine unerwartete und/oder ungewöhnliche Verkehrssituation erkennt, und/oder
- Markieren von erfassten Verkehrsdaten 10 für den mindestens einen Navigationsabschnitt Ai mit einem Zeitstempel Date, wenn das Fahrzeug F die erfassten Verkehrsdaten 10 als Schwarmdaten 20 für andere Fahrzeuge F bereitstellt, und/oder
- Übermitteln von erfassten Verkehrsdaten 10 für den mindestens einen Navigationsabschnitt Ai mit einem Notfallmarker Not und/oder mit einem Zeitstempel Date zur Nutzung als Schwarmdaten 20

über eine Car2X-Kommunikation an die externe Vorrichtung 200,
über eine Car2Car-Kommunikation an andere Fahrzeuge, und/oder
über eine Car2I-Kommunikation an Infrastrukturteilnehmer.

Auf diese Weise kann das eigene Fahrzeug selbst dazu beitragen, dass ungewöhnliche und/oder unerwartete Situationen, wie z. B. Baustellen ohne Fahrbahnmarkierungen, Hindernisse auf der Fahrbahn o. Ä. schneller erkannt werden. Auch kann somit das eigene Fahrzeug selbst dazu beitragen, dass neue aktuelle Schwarmdaten schneller zur Verfügung gestellt werden können.

Mithilfe des Verfahrens kann zum einen sichergestellt werden, dass Fahrerassistenzsysteme 100 viel schneller auf geänderte Situationen reagieren können, und dass Änderungen viel schneller bekanntgegeben werden.

Mithilfe des Verfahrens kann zum anderen sichergestellt werden, dass, insbesondere wenn ein Vergleich der erhaltenen Schwarmdaten 20 mit den erfassten Verkehrsdaten 10 nicht möglich oder erschwert ist, es ermöglicht wird, veraltete Schwarmdaten 20 schneller zu erkennen und/oder die aktuellen Schwarmdaten 20 schneller zu erhalten.

Vorteilhafterweise kann mithilfe des Verfahrens eine assistierte Bereitstellung von Fahrzeugfunktionen AF erheblich verbessert werden. Der Benutzer des Fahrzeuges F wird mithilfe des Verfahrens weniger eingreifen müssen. Die Sicherheit im Betrieb des Fahrzeuges F kann mithilfe des Verfahrens deutlich erhöht werden. Der Kundenkomfort und das Vertrauen in das Fahrerassistenzsystem 100 können mithilfe des Verfahrens wesentlich erhöht werden.

Eine entsprechende Steuervorrichtung 110 zum Ansteuern eines Fahrerassistenzsystems 100 beim Bereitstellen von assistierten Fahrfunktionen AF, insbesondere von assistierten Lenkungsfunktionen LF, vorzugsweise von Quer- und/oder Längslenkungsfunktionen, eines Fahrzeuges F stellt ebenfalls einen Aspekt der Erfindung dar.

Die Steuervorrichtung 110 kann außerdem zum Ansteuern des mindestens einen fahrzeugeigenen Sensors S, insbesondere einer Kamera K, vorzugsweise einer Frontkamera, ausgeführt sein.

Die Steuervorrichtung 110 kann grundsätzlich als eine separate Steuervorrichtung zum Bereitstellen von assistierten Fahrfunktionen AF ausgeführt sein.

Vorteilhafterweise kann die Steuervorrichtung 110 einen Pufferspeicher zur Speicherung von erfassten Verkehrsdaten 10Schwarmdaten 20 aufweisen, wobei insbesondere der Pufferspeicher als ein Arbeitsspeicher ausgeführt sein kann.

Ein entsprechendes Fahrerassistenzsystem 100 zum Bereitstellen von assistierten Fahrfunktionen AF, insbesondere von assistierten Lenkungsfunktionen LF, vorzugsweise von Quer- und/oder Längslenkungsfunktionen, eines Fahrzeuges F, aufweisend eine korrespondierende Steuervorrichtung 110, stellt ebenfalls einen Aspekt der Erfindung dar.

Das Fahrerassistenzsystem 100 kann einen Pufferspeicher zur Speicherung von erfassten Verkehrsdaten 10Schwarmdaten 20 aufweisen, wobei insbesondere der Pufferspeicher als ein Arbeitsspeicher, vorzugsweise ein flüchtiger Datenspeicher, ausgeführt sein kann.

Zudem oder stattdessen kann das Fahrerassistenzsystem 100 einen Schwarmdatenspeicher zur Speicherung von erweiterten Schwarmdaten 20 aufweisen, wobei insbesondere der Schwarmdatenspeicher als ein permanenter Datenspeicher ausgeführt sein kann.

Ein entsprechendes Fahrzeug F, aufweisend ein korrespondierendes Fahrerassistenzsystem 100, welches wie oben beschrieben ausgeführt sein kann, stellt ebenfalls einen Aspekt der Erfindung dar.

Die voranstehende Erläuterung der Ausführungsformen beschreibt die vorliegende Erfindung ausschließlich im Rahmen von Beispielen.

### Bezugszeichenliste

- 200: Vorrichtung

- 100: Fahrerassistenzsystem
- 110: Steuervorrichtung

- AF: Fahrfunktionen
- LF: Lenkungsfunktionen

- Ai: Navigationsabschnitt

- 20: Schwarmdaten
- 10: Verkehrsdaten

- M1: Fahrbahnmarkierungen
- M2: Fahrbahnmarkierungen
- dA: Abweichungsbereich
- T: Trajektoriendaten

- B1: Normalbetrieb
- B2: Sonderbetrieb

- Date: Zeitstempel
- Not: Notfallmarker

- F: Fahrzeug
- K: Kamera
- S: Sensor

## Patentansprüche

1. Verfahren zum Ansteuern eines Fahrerassistenzsystems (100) beim Bereitstellen von assistierten Fahrfunktionen (AF), umfassend assistierte Lenkungsfunktionen (LF), vorzugsweise von Quer- und/oder Längslenkungsfunktionen, eines Fahrzeuges (F), wobei insbesondere das Fahrzeug (F) als ein assistiert, teilautomatisiert oder ein hochautomatisiert fahrendes Fahrzeug (F) ausgeführt sein kann,
aufweisend:
- Erfassen von Verkehrsdaten (10) durch mindestens einen fahrzeugeigenen Sensor (S), insbesondere eine Kamera (K), vorzugsweise eine Frontkamera, für mindestens einen Navigationsabschnitt (Ai), wobei die erfassten Verkehrsdaten (10) erfasste Fahrbahnmarkierungen (M1) für den mindestens einen Navigationsabschnitt (Ai) aufweisen,
- Erhalten von Schwarmdaten (20) von mindestens einer externen Vorrichtung (200) für den mindestens einen Navigationsabschnitt (Ai), wobei die erhaltenen Schwarmdaten (20) erhaltene Fahrbahnmarkierungen (M2) für den mindestens einen Navigationsabschnitt (Ai) aufweisen, wobei die Schwarmdaten durch andere Fahrzeuge erzeugt wurden, **gekennzeichnet durch**:
- Bereitstellen von assistierten Fahrfunktionen für den mindestens einen Navigationsabschnitt (Ai) in Abhängigkeit von einem Vergleichen in zwei unterschiedlichen Betriebsmodi (B1, B2):
- einem Normalbetrieb (B1),
bei dem assistierte Fahrfunktionen des Fahrzeuges (F) mithilfe von den erhaltenen Schwarmdaten (20) und den erfassten Verkehrsdaten (10) bereitgestellt werden, wenn ein Vergleichen der erhaltenen Schwarmdaten (20) mit den erfassten Verkehrsdaten (10) möglich ist,
- einem Sonderbetrieb (B2),
bei dem assistierte Fahrfunktionen des Fahrzeuges (F) nur mithilfe von den erhaltenen Schwarmdaten (20) bereitgestellt werden,
wenn ein Vergleichen der erhaltenen Schwarmdaten (20) mit den erfassten Verkehrsdaten (10) nicht möglich oder erschwert ist.

2. Verfahren nach Anspruch 1,
wobei die erhaltenen Schwarmdaten (20) Trajektoriendaten (T) für den mindestens einen Navigationsabschnitt (Ai) aufweisen.

3. Verfahren nach Anspruch 2,
wobei im Normalbetrieb (B1) mindestens ein Steuerablauf durchgeführt wird, wenn erfasste Fahrbahnmarkierungen (M1) für den mindestens einen Navigationsabschnitt (Ai) unvollständig sind:
- Vergleichen von verfügbaren erfassten Fahrbahnmarkierungen (M1) gemäß den erfassten Verkehrsdaten (10) mit den erhaltenen Fahrbahnmarkierungen (M2) gemäß den erhaltenen Schwarmdaten (20), und
- Bestimmen einer Spur in Abhängigkeit von den Trajektoriendaten (T) für den mindestens einen Navigationsabschnitt (Ai), wenn die verfügbaren erfassten Fahrbahnmarkierungen (M1) mit den erhaltenen Fahrbahnmarkierungen (M2) in einem zulässigen Abweichungsbereich (dA) liegen, und/oder von verfügbaren erfassten Fahrbahnmarkierungen (M1) gemäß den erfassten Verkehrsdaten (10) und/oder von den erhaltenen Fahrbahnmarkierungen (M2) gemäß den erhaltenen Schwarmdaten (20), oder
- Verwerfen von den erhaltenen Schwarmdaten (20), wenn die verfügbaren erfassten Fahrbahnmarkierungen (M1) mit den erhaltenen Fahrbahnmarkierungen (M2) außerhalb des zulässigen Abweichungsbereichs (dA) liegen.

4. Verfahren nach einem der vorhergehenden Ansprüche,
wobei der Sonderbetrieb (B2) durchgeführt wird,
- wenn keine Verkehrsdaten (10) erfasst werden können, bspw. wenn Fahrbahnmarkierungen (M1) nicht vorhanden sind, und/oder
- wenn die erfassten Verkehrsdaten (10) nicht vollständig erfasst werden können, insbesondere aufgrund von aktueller Verkehrssituation, bspw. wenn Fahrbahnmarkierungen (M1) verdeckt sind, oder bspw. wenn eine scharfe Kurve bevorsteht, und/oder
- wenn die erhaltenen Schwarmdaten (20) vertrauenswürdig sind, und/oder
- wenn die erhaltenen Schwarmdaten (20) keinen Notfallmarker (Not) aufweisen, wobei der Notfallmarker (Not) eine unerwartete und/oder ungewöhnliche Verkehrssituation kennzeichnet und/oder
- wenn die erhaltenen Schwarmdaten (20) gültig sind.

5. Verfahren nach einem der vorhergehenden Ansprüche,
wobei im Sonderbetrieb (B2) mindestens eine von den folgenden Aktionen durchgeführt wird:
- Reduzieren des mindestens einen Navigationsabschnittes (Ai), für den Schwarmdaten (20) erhalten werden, insbesondere abgefragt werden, und/oder
- Anpassen des mindestens einen Navigationsabschnittes (Ai) in Abhängigkeit von seinen geografischen und/oder topologischen Parametern,
- Überprüfen von erhaltenen Schwarmdaten (20) für den mindestens einen Navigationsabschnitt (Ai) auf einen Notfallmarker (Not),
- Überprüfen von erhaltenen Schwarmdaten (20) für den mindestens einen Navigationsabschnitt (Ai) auf Gültigkeit in Abhängigkeit von ihrem Zeitstempel (Date),
- Verwerfen von erhaltenen Schwarmdaten (20) mit einem Notfallmarker (Not) und/oder von veralteten Schwarmdaten (20),
- Ausgeben einer Empfehlung an einen Benutzer des Fahrzeuges (F) zu einem manuellen Übernehmen von Fahrfunktionen (AF).

6. Verfahren nach einem der vorhergehenden Ansprüche,
wobei das Verfahren ferner aufweist:
- Markieren von erfassten Verkehrsdaten (10) für den mindestens einen Navigationsabschnitt (Ai) mit einem Notfallmarker (Not), wenn das Fahrzeug (F) eine unerwartete und/oder ungewöhnliche Verkehrssituation erkennt, und/oder
- Markieren von erfassten Verkehrsdaten (10) für den mindestens einen Navigationsabschnitt (Ai) mit einem Zeitstempel (Date), wenn das Fahrzeug (F) die erfassten Verkehrsdaten (10) als Schwarmdaten (20) für andere Fahrzeuge (F) bereitstellt,
- Übermitteln von erfassten Verkehrsdaten (10) für den mindestens einen Navigationsabschnitt (Ai) mit einem Notfallmarker (N) und/oder mit einem Zeitstempel (Date) zur Nutzung als Schwarmdaten(20)
über eine Car2X-Kommunikation an die externe Vorrichtung (200),
über eine Car2Car-Kommunikation an andere Fahrzeuge, und/oder
über eine Car2I-Kommunikation an Infrastrukturteilnehmer.

7. Computerprogrammprodukt, umfassend Befehle, die bei der Ausführung des Computerprogramms durch einen Computer diesen veranlassen, ein Verfahren nach einem der vorhergehenden Ansprüche durchzuführen.

8. Fahrerassistenzsystem (100) zum Bereitstellen von assistierten Fahrfunktionen (AF), insbesondere von assistierten Lenkungsfunktionen (LF), vorzugsweise von Quer- und/oder Längslenkungsfunktionen, eines Fahrzeuges (F), wobei insbesondere das Fahrzeug (F) als ein assistiert, teilautomatisiert oder ein hochautomatisiert fahrendes Fahrzeug (F) ausgeführt sein kann,
aufweisend eine Steuervorrichtung (110) umfassend:
eine Speichervorrichtung und eine Rechenvorrichtung,
wobei in der Speichervorrichtung ein Code hinterlegt ist,
und wobei beim Ausführen des Codes durch die Rechenvorrichtung ein Verfahren nach einem der Ansprüche 1 bis 6 durchgeführt wird.

9. Fahrerassistenzsystem (100) nach Anspruch 8,
wobei die Steuervorrichtung (110) zum Ansteuern des mindestens einen fahrzeugeigenen Sensors (S), insbesondere einer Kamera (K), vorzugsweise einer Frontkamera, ausgeführt ist,
und/oder wobei die Steuervorrichtung (110) als eine separate Steuervorrichtung zum Bereitstellen von assistierten Fahrfunktionen (AF) ausgeführt ist,
und/oder wobei die Steuervorrichtung (110) einen Pufferspeicher zur Speicherung von erhaltenen Schwarmdaten (20) aufweist,
wobei insbesondere der Pufferspeicher als ein Arbeitsspeicher ausgeführt ist.

10. Fahrerassistenzsystem (100) nach dem vorhergehenden Anspruch 8 oder 9,
wobei das Fahrerassistenzsystem (100) einen Pufferspeicher zur Speicherung von erhaltenen Schwarmdaten (20) aufweist,
wobei insbesondere der Pufferspeicher als ein Arbeitsspeicher, vorzugsweise ein flüchtiger Datenspeicher, ausgeführt ist,
und/oder wobei das Fahrerassistenzsystem (100) einen Schwarmdatenspeicher zur Speicherung von erweiterten Schwarmdaten (20) aufweist,
wobei insbesondere der Schwarmdatenspeicher als ein permanenter Datenspeicher ausgeführt ist.

11. Fahrzeug (F), insbesondere ein assistiert oder ein hochassistiert fahrendes Fahrzeug (F), aufweisend ein Fahrerassistenzsystem (100) nach einem der Ansprüche 8 bis 10.

## Claims

1. Method for controlling a driver assistance system (100) when providing assisted driving functions (AF), including assisted steering functions (LF), preferably lateral and/or longitudinal steering functions, of a vehicle (F), wherein in particular the vehicle (F) may be designed as a vehicle (F) which is driven in an assisted, semi-automated or highly automated manner,
comprising:
- capturing traffic data (10) by means of at least one on-board sensor (S), in particular a camera (K), preferably a front camera, for at least one navigation section (Ai), wherein the captured traffic data (10) comprise captured road markings (M1) for the at least one navigation section (Ai),
- receiving swarm data (20) from at least one external device (200) for the at least one navigation section (Ai), wherein the received swarm data (20) comprise received road markings (M2) for the at least one navigation section (Ai), wherein the swarm data were generated by other vehicles, **characterized by:**
- providing assisted driving functions for the at least one navigation section (Ai) depending on a comparison in two different operating modes (B1, B2):
- a normal operation (B1),
in which assisted driving functions of the vehicle (F) are provided using the received swarm data (20) and the captured traffic data (10) if it is possible to compare the received swarm data (20) with the captured traffic data (10),
- a special operation (B2),
in which the vehicle's assisted driving functions (F) are provided only using the received swarm data (20)
if it is not possible or difficult to compare the received swarm data (20) with the captured traffic data (10).

2. Method according to claim 1,
wherein the received swarm data (20) comprise trajectory data (T) for the at least one navigation section (Ai).

3. Method according to claim 2,
wherein, in the normal operation (B1), at least one control sequence is carried out if the captured road markings (M1) for the at least one navigation section (Ai) are incomplete:
- comparing available captured road markings (M1) according to the captured traffic data (10) with the received road markings (M2) according to the received swarm data (20), and
- determining a lane depending on the trajectory data (T) for the at least one navigation section (Ai), if the available captured road markings (M1) are within a permissible deviation range (dA) with respect to the received road markings (M2), and/or depending on available captured road markings (M1) according to the captured traffic data (10), and/or depending on the received road markings (M2) according to the received swarm data (20), or
- discarding the received swarm data (20) if the available captured road markings (M1) are outside the permissible deviation range (dA) with respect to the received road markings (M2).

4. Method according to any of the preceding claims,
wherein the special operation (B2) is carried out
- if no traffic data (10) can be captured, e.g. if road markings (M1) are not present, and/or
- if the captured traffic data (10) cannot be fully captured, in particular due to the current traffic situation, e.g. if road markings (M1) are obscured, or e.g. if a sharp bend lies ahead, and/or
- if the received swarm data (20) are trustworthy, and/or
- if the received swarm data (20) do not have an emergency marker (Not), wherein the emergency marker (Not) indicates an unexpected and/or unusual traffic situation and/or
- if the received swarm data (20) are valid.

5. Method according to any of the preceding claims,
wherein, in the special operation (B2), at least one of the following actions is carried out:
- reducing the at least one navigation section (Ai) for which swarm data (20) are received, in particular retrieved, and/or
- adapting the at least one navigation section (Ai) depending on its geographical and/or topological parameters,
- checking the received swarm data (20) for the at least one navigation section (Ai) for an emergency marker (Not),
- checking the validity of the received swarm data (20) for the at least one navigation section (Ai) depending on the time stamp (Date) of said data,
- discarding received swarm data (20) having an emergency marker (Not) and/or outdated swarm data (20),
- issuing a recommendation to a user of the vehicle (F) to manually take over driving functions (AF).

6. Method according to any of the preceding claims,
wherein the method further comprises:
- marking the captured traffic data (10) for the at least one navigation section (Ai) with an emergency marker (Not) when the vehicle (F) detects an unexpected and/or unusual traffic situation, and/or
- marking the captured traffic data (10) for the at least one navigation section (Ai) with a time stamp (Date) when the vehicle (F) provides the captured traffic data (10) as swarm data (20) for other vehicles (F),
- transmitting the captured traffic data (10) for the at least one navigation section (Ai) with an emergency marker (N) and/or with a time stamp (Date), for use as swarm data (20),
via Car2X communication to the external device (200),
via Car2Car communication to other vehicles, and/or
via Car2I communication to infrastructure participants.

7. Computer program product comprising commands which, when the computer program is executed by a computer, cause the computer to carry out a method according to any of the preceding claims.

8. Driver assistance system (100) for providing assisted driving functions (AF), in particular assisted steering functions (LF), preferably lateral and/or longitudinal steering functions, of a vehicle (F), wherein in particular the vehicle (F) may be designed as a vehicle (F) which is driven in an assisted, semi-automated or highly automated manner,
comprising a control device (110) having:
a storage device and a computing device,
wherein a code is stored in the storage device,
and wherein, when the code is executed by the computing device, a method according to any of claims 1 to 6 is carried out.

9. Driver assistance system (100) according to claim 8,
wherein the control device (110) is designed to control the at least one on-board sensor (S), in particular a camera (K), preferably a front camera,
and/or wherein the control device (110) is designed as a separate control device for providing assisted driving functions (AF),
and/or wherein the control device (110) comprises a buffer memory for storing received swarm data (20),
wherein in particular the buffer memory is designed as a working memory.

10. Driver assistance system (100) according to the preceding claim 8 or 9,
wherein the driver assistance system (100) comprises a buffer memory for storing the received swarm data (20),
wherein in particular the buffer memory is designed as a main memory, preferably a volatile data memory,
and/or wherein the driver assistance system (100) comprises a swarm data memory for storing extended swarm data (20),
wherein in particular the swarm data memory is designed as a permanent data memory.

11. Vehicle (F), in particular a vehicle (F) which is driven in an assisted or highly assisted manner, comprising a driver assistance system (100) according to any of claims 8 to 10.

## Revendications

1. Procédé de commande d'un système d'assistance au conducteur (100) lors de la mise à disposition de fonctions de conduite assistée (AF), comprenant des fonctions de direction assistée (LF), de préférence des fonctions de direction transversale et/ou longitudinale, d'un véhicule (F), dans lequel en particulier le véhicule (F) peut être conçu sous la forme d'un véhicule (F) à conduite assistée, partiellement automatisée ou hautement automatisée,
présentant :
- la détection de données de trafic (10) par au moins un capteur (S) propre au véhicule, en particulier une caméra (K), de préférence une caméra frontale, pour au moins une section de navigation (Ai), dans lequel les données de trafic (10) détectées présentent des marquages de chaussée (M1) détectés pour l'au moins une section de navigation (Ai),
- l'obtention de données en essaim (20) à partir d'au moins un dispositif externe (200) pour l'au moins une section de navigation (Ai), dans lequel les données en essaim (20) obtenues présentent des marquages routiers (M2) obtenus pour l'au moins une section de navigation (Ai), dans lequel les données en essaim ont été générées par d'autres véhicules, **caractérisé par** :
- la fourniture de fonctions de conduite assistée pour l'au moins une section de navigation (Ai) en fonction d'une comparaison dans deux modes de fonctionnement différents (B1, B2) :
- un fonctionnement normal (B1),
dans lequel des fonctions de conduite assistée du véhicule (F) sont mises à disposition à l'aide des données en essaim (20) obtenues et des données de trafic (10) détectées, lorsqu'une comparaison des données en essaim (20) obtenues avec les données de trafic (10) détectées est possible,
- un fonctionnement spécial (B2),
dans lequel des fonctions de conduite assistée du véhicule (F) sont mises à disposition uniquement à l'aide des données en essaim (20) obtenues,
lorsqu'une comparaison des données en essaim (20) obtenues avec les données de trafic (10) détectées n'est pas possible.

2. Procédé selon la revendication 1,
dans lequel les données en essaim (20) obtenues présentent des données de trajectoire (T) pour l'au moins une section de navigation (Ai).

3. Procédé selon la revendication 2,
dans lequel, en fonctionnement normal (B1), au moins une procédure de commande est exécutée lorsque des marquages de chaussée (M1) détectés pour l'au moins une section de navigation (Ai) sont incomplets :
- comparaison des marquages de chaussée (M1) détectés disponibles selon les données de trafic (10) détectées avec les marquages de chaussée (M2) obtenus selon les données en essaim (20) obtenues, et
- détermination d'une voie en fonction des données de trajectoire (T) pour l'au moins une section de navigation (Ai) lorsque les marquages de chaussée (M1) détectés disponibles se trouvent avec les marquages de chaussée (M2) obtenus dans une plage d'écart (dA) admissible, et/ou à partir des marquages de chaussée (M1) détectés disponibles selon les données de trafic (10) détectées et/ou à partir des marquages de chaussée (M2) obtenus selon les données d'essaim (20) obtenues, ou
- rejet des données en essaim (20) obtenues si les marquages de chaussée (M1) détectés disponibles avec les marquages de chaussée (M2) obtenus sont en dehors de la plage d'écart (dA) admissible.

4. Procédé selon l'une des revendications précédentes,
dans lequel le fonctionnement spécial (B2) est exécuté,
- lorsqu'aucune donnée de trafic (10) ne peut être détectée, par exemple en l'absence de marquages de chaussée (M1), et/ou
- lorsque les données de trafic (10) détectées ne peuvent pas être entièrement détectées, en particulier en raison de la situation actuelle du trafic, par exemple lorsque les marquages de chaussée (M1) sont masqués, ou par exemple lorsqu'un virage serré est imminent, et/ou
- lorsque les données en essaim (20) obtenues sont dignes de confiance, et/ou
- lorsque les données en essaim (20) obtenues ne présentent pas de marqueur d'urgence (Not), dans lequel le marqueur d'urgence (Not) caractérise une situation de trafic inattendue et/ou inhabituelle, et/ou
- lorsque les données en essaim (20) obtenues sont valables.

5. Procédé selon l'une des revendications précédentes,
dans lequel au moins l'une des actions suivantes est exécutée dans le fonctionnement spécial (B2) :
- réduction d'au moins une section de navigation (Ai) pour laquelle des données en essaim (20) sont obtenues, en particulier interrogées, et/ou
- adaptation de l'au moins une section de navigation (Ai) en fonction de ses paramètres géographiques et/ou topologiques,
- vérification de données en essaim (20) obtenues pour l'au moins une section de navigation (Ai) pour un marqueur d'urgence (Not),
- vérification de la validité de données en essaim (20) obtenues pour l'au moins une section de navigation (Ai) en fonction de leur horodatage (Date),
- rejet de données en essaim (20) obtenues avec un marqueur d'urgence (Not) et/ou de données en essaim (20) obsolètes,
- émission d'une recommandation à un utilisateur du véhicule (F) pour qu'il prenne en charge manuellement des fonctions de conduite (AF).

6. Procédé selon l'une des revendications précédentes,
dans lequel le procédé présente en outre :
- le marquage de données de trafic (10) détectées pour l'au moins une section de navigation (Ai) avec un marqueur d'urgence (Not) lorsque le véhicule (F) détecte une situation de trafic inattendue et/ou inhabituelle, et/ou
- le marquage de données de trafic (10) détectées pour l'au moins une section de navigation (Ai) avec un horodatage (Date) lorsque le véhicule (F) met à disposition les données de trafic (10) détectées sous forme de données en essaim (20) pour d'autres véhicules (F),
- transmission de données de trafic (10) détectées pour l'au moins une section de navigation (Ai) avec un marqueur d'urgence (N) et/ou avec un horodatage (Date) pour utilisation comme données en essaim (20)
au dispositif externe (200) par l'intermédiaire d'une communication Car2X,
à d'autres véhicules par l'intermédiaire d'une communication Car2Car, et/ou
aux participants de l'infrastructure par l'intermédiaire d'une communication Car2I.

7. Produit-programme d'ordinateur, comprenant des instructions qui, lorsque le programme d'ordinateur est exécuté par un ordinateur, amènent celui-ci à mettre en œuvre un procédé selon l'une des revendications précédentes.

8. Système d'assistance au conducteur (100) pour la mise à disposition de fonctions de conduite assistée (AF), en particulier de fonctions de direction assistée (LF), de préférence de fonctions de direction transversale et/ou longitudinale, d'un véhicule (F), dans lequel en particulier le véhicule (F) peut être conçu sous la forme d'un véhicule (F) à conduite assistée, partiellement automatisée ou hautement automatisée,
présentant un dispositif de commande (110) comprenant :
un dispositif de mémoire et un dispositif de calcul,
dans lequel un code est enregistré dans le dispositif de mémoire,
et dans lequel, lors de l'exécution du code par le dispositif de calcul, un procédé selon l'une des revendications 1 à 6 est mis en œuvre.

9. Système d'assistance au conducteur (100) selon la revendication 8,
dans lequel le dispositif de commande (110) est conçu pour commander l'au moins un capteur (S) propre au véhicule, en particulier une caméra (K), de préférence une caméra frontale,
et/ou dans lequel le dispositif de commande (110) est conçu sous la forme d'un dispositif de commande séparé pour la mise à disposition de fonctions de conduite assistée (AF),
et/ou dans lequel le dispositif de commande (110) présente une mémoire tampon pour mémoriser des données en essaim (20) obtenues,
dans lequel la mémoire tampon est en particulier conçue sous la forme d'une mémoire de travail.

10. Système d'assistance au conducteur (100) selon la revendication 8 ou 9 précédente,
dans lequel le système d'assistance au conducteur (100) présente une mémoire tampon pour mémoriser des données en essaim (20) obtenues,
dans lequel, en particulier, la mémoire tampon est conçue sous la forme d'une mémoire de travail, de préférence une mémoire de données volatile,
et/ou dans lequel le système d'assistance au conducteur (100) présente une mémoire de données en essaim pour la mémorisation de données en essaim (20) étendues,
dans lequel la mémoire de données en essaim est en particulier conçue sous la forme d'une mémoire de données permanente.

11. Véhicule (F), en particulier un véhicule (F) à conduite assistée ou à conduite hautement assistée, présentant un système d'assistance a conducteur (100) selon l'une des revendications 8 à 10.
